Europäisches Patentamt

European Patent Office

Office européen des brevets

(11) Veröffentlichungsnummer : **0 129 273**
**B1**

# (12) EUROPÄISCHE PATENTSCHRIFT

(45) Veröffentlichungstag der Patentschrift :
**19.07.89**

(51) Int. Cl.⁴ : **B 01 D 53/34**

(21) Anmeldenummer : **84200771.8**

(22) Anmeldetag : **29.05.84**

(54) Verfahren zur Abtrennung von Schadstoffen aus Abgasen.

(30) Priorität : 21.06.83 DE 3322159

(43) Veröffentlichungstag der Anmeldung :
27.12.84 Patentblatt 84/52

(45) Bekanntmachung des Hinweises auf die Patenterteilung : 19.07.89 Patentblatt 89/29

(84) Benannte Vertragsstaaten :
AT BE DE FR GB IT NL SE

(56) Entgegenhaltungen :
EP--A-- 0 074 772
DE--A-- 3 009 366
DE--A-- 3 135 200
DE--A-- 3 235 559
US--A-- 3 485 014

(73) Patentinhaber : METALLGESELLSCHAFT AG
Reuterweg 14 Postfach 3724
D-6000 Frankfurt/M.1 (DE)

(72) Erfinder : Graf, Rolf, Dr.
Am Felsenkeller 43
D-6382 Friedrichsdorf (DE)
Erfinder : Reh, Lothar, Dr.
Stettiner Strasse 3
D-6000 Frankfurt am Main 60 (DE)
Erfinder : Schröter, Michael, Dr.
Lindenstrasse 32
D-6000 Frankfurt am Main (DE)

(74) Vertreter : Fischer, Ernst, Dr.
Reuterweg 14
D-6000 Frankfurt am Main 1 (DE)

EP 0 129 273 B1

# EP 0 129 273 B1

## Beschreibung

Die Erfindung betrifft ein Verfahren zur Abtrennung von im wesentlichen aus Schwefeloxiden gebildeten Schadstoffen aus Abgasen bei Temperaturen unterhalb 150 °C mittels eines Sorptionsmittels auf Basis Kalziumkarbonat, Kalziumoxid und/oder Kalziumhydroxid, das in einer aus Wirbelschichtreaktor, Abscheider und Rückführleitung gebildeten zirkulierenden Wirbelschicht geführt wird.

Bei der Verbrennung fossiler Brennstoffe fallen Rauchgase an, die — je nach Schwefelgehalt der Ausgangsstoffe — beträchtliche Schwefeloxidgehalte, insbesondere Gehalte an Schwefeldioxid, aufweisen können. Auch die ständig steigende Zahl von Müllverbrennungsanlagen produziert Abgase, die neben Schwefeloxiden infolge der Verbrennung praktisch stets vorhandener Kunststoffe als weitere Verunreinigungen Chlorwasserstoff und Fluorwasserstoff enthalten. Die Umweltschutzbestimmungen verlangen, daß derartige Verunreinigungen aus den Gasen vor ihrer Ableitung in die Atmosphäre entfernt werden.

Die mit Abstand größte Zahl von Verfahren zur Abgasreinigung entfernt die vorgenannten Verunreinigungen durch Naßwäsche, wobei insbesondere Lösungen oder Aufschlämmungen von mit den Schadstoffen reagierenden Substanzen eingesetzt werden (Ullmann's Encyklopädie der Techn. Chemie, 3. Auflage, Band 2/2 (1968), Seite 419).

Weitere Verfahren arbeiten nach dem Prinzip der sogenannten trockenen Gasreinigung. Dieser Begriff schließt auch solche Verfahren ein, bei denen das Sorptionsmittel in flüssiger Phase aufgegeben oder die Sorption unter Zugabe von Wasser erfolgt, sofern die Flüssigkeit in der Gasreinigung in die Gasphase übergeht. Anstelle von Wasser kann auch Wasserdampf zugegeben werden. Dabei werden die Gase durch eine ruhende Schüttung von mit den Verunreinigungen reagierenden Feststoffen, wie z. B. Aktivkohle oder Braunkohlenkoks, geleitet. Die Abgasreinigung kann auch mit Hilfe einer sogenannten Wanderschicht erfolgen, bei der der Feststoff während der Abwärtsbewegung im Reaktor zunehmend beladen und schließlich ausgetragen wird. Eine dem Austrag entsprechende Menge frischen Materials wird dabei dem Reaktor im oberen Bereich aufgegeben (Meier zu Köcker « Beurteilung und Aussichten von Verfahren zur Rauchgasentschwefelung » ; V. G. B. Kraftwerkstechnik 53 (1973), Seite 516 ff.).

Bei einem anderen bekannten Verfahren werden beispielsweise Schwefeloxide aus Gasen entfernt, indem man in diese pneumatisch Adsorbentien einträgt, die so erhaltene Gas/Feststoff-Dispersion pneumatisch durch eine Reaktionsstrecke und dann durch eine Verweilzone leitet und danach den Feststoff vom Gas trennt. Nach bestimmten Regeneriermaßnahmen wird letztlich ein Feststoffteilstrom zur Gasreinigung zurückgeführt (US-PS 3 485 014).

Schließlich ist eine Einrichtung zur trockenen Entfernung von Schadstoffen aus Rauchgasen bekannt, die in Abzugsrichtung hinter dem Verbrennungsbereich in einem Kesselbereich mit einer Rauchgastemperatur von 700 bis 900 °C arbeitet. Sie weist ein den Rauchgasquerschnitt vollständig ausfüllendes Wirbelbett und/oder eine zirkulierende Wirbelschicht, die z. B. mit Calcium- und/oder Magnesiumcarbonat als Absorptionsmittel beaufschlagt ist, auf (DE-OS 30 09 366). Dabei wird der Anströmboden des Wirbelbettes zweckmäßigerweise gekühlt.

Die wesentlichen Nachteile der Naßreinigungsverfahren sind, daß der anfallende Sulfite und Sulfate, gegebenenfalls auch Chloride und Fluoride enthaltende Schlamm nur schwierig deponierbar ist und daß die gereinigten Abgase erneut aufgeheizt werden müssen. Die bekannten Trockenreinigungsverfahren mit stationärem oder Wanderbett sind insofern mit Nachteilen behaftet, als wegen der Grobkörnigkeit der Absorbentien das Bindevermögen für die im Abgas enthaltenen Verunreinigungen nur sehr unvollkommen ausgenutzt wird und wegen der vergleichsweise geringen zulässigen Gasgeschwindigkeit sowie der großen zu reinigenden Gasmengen beträchtliche Reaktorabmessungen erforderlich sind.

Die wesentlichen Nachteile des Verfahrens gemäß US-PS 3 485 014 liegen in dem Erfordernis, eine Aufteilung des zu reinigenden Gasstromes sowie eine präzise Dosierung des Absorptionsmittels in einer geeigneten, insbesondere verschleißfesten Vorrichtung vornehmen zu müssen. Nachteilig ist auch die für eine hinreichende Entfernung der Verunreinigungen ungenügend lange Verweilzeit der Gase in der Reaktionsstrecke oder aber die sonst erforderliche beträchtliche Bauhöhe.

Die Entfernung von Schadstoffen aus Rauchgasen von 700 bis 900 °C gemäß DE-OS 30 09 366 bereitet insofern Schwierigkeiten, als es besonderer Maßnahmen und Eingriffe in die Verbrennungsanlage bedarf, um die Temperatur der Rauchgase, die beim Austritt aus dem Brennraum üblicherweise heißer und beim Austritt aus dem Abhitzekessel üblicherweise kälter sind, auf einen Wert im Bereich von 700 bis 900 °C einzustellen.

Ein allen Trockenreinigungsverfahren gemeinsamer Nachteil ist, daß eine Ausnutzung des Sorptionsmittels ähnlich der bei der Naßwäsche praktisch nicht erreichbar ist. Außerdem stellt das beladene Sorptionsmittel bei der überwiegenden Zahl der Fälle ein Gemisch von Kalziumsulfit und Kalziumsulfat dar, das nur schwer nutzbar gemacht werden kann und in der Regel einer Sonderdeponie zugeführt werden muß.

Zwar ist es im Zusammenhang mit der Schwefeloxidentfernung aus Rauchgasen in Sprühtrocknern mittels kalkhaltiger Suspensionen (DE-OS 31 35 200) bzw. mit der Entschwefelung von Rauchgasen mit Lösungen oder Suspensionen basischer Adsorbentien, die in trockenes Sulfit und Sulfat übergehen (EP-OS 74 772) bekannt, die beladenen Sorptionsmittel einer oxidierenden Behandlung zwecks Bildung von

2

Kalziumsulfat zu unterwerfen. Hierdurch läßt sich das Deponieproblem weitgehend vermeiden, eine bessere Kutzung des Sorptionsmittels ist hingegen nicht erzielbar.

Aufgabe der Erfindung ist es, ein Verfahren bereitzustellen, das die Nachteile der bekannten Gasreinigungsverfahren nicht aufweist, einfach in der Durchführung ist, sich billigster Sorptionsmittel bedienen kann und eine hohe Ausnutzung des Sorptionsvermögens der Sorptionsmittel gewährleistet.

Die Aufgabe wird gelöst, indem das Verfahren der eingangs genannten Art entsprechend der Erfindung derart ausgestaltet wird, daß man

1. aus der zirkulierenden Wirbelschicht einen Teilstrom beladenen Sorptionsmittels abzweigt und bei einer Temperatur von 600 bis 1200 °C einer oxidierenden Behandlung unterwirft,

2. den überwiegenden Teil des oxidierend behandelten Sorptionsmittels in die zirkulierende Wirbelschicht zurückführt und den verbleibenden das eingesetzte Sorptionsmittel vornehmlich als Kalziumsulfat enthaltenden Teilstrom ausschleust

3. dem ausgeschleusten Teilstrom entsprechend frisches Sorptionsmittel der zirkulierenden Wirbelschicht und/oder der Stufe der oxidierenden Behandlung zuführt.

Das bei der Erfindung angewendete Prinzip der expandierten bzw. zirkulierender Wirbelschicht zeichnet sich dadurch aus, daß — im Unterschied zur « klassischen » Wirbelschicht, bei der eine dichte Phase durch einen deutlichen Dichtesprung von dem darüber befindlichen Gasraum getrennt ist — Verteilungszustände ohne definierte Grenzschicht vorliegen. Ein Dichtesprung zwischen dichter Phase und dem darüber befindlichen Staubraum ist nicht vorhanden, statt dessen nimmt innerhalb des Reaktors die Feststoffkonzentration von unten nach oben ab.

Der im Wirbelschichtreaktor herrschende Wirbelzustand ist derart eingestellt, daß sich unter Verwendung der Definitionen über die Kennzahlen von Froude und Archimedes folgende Bereiche ergeben :

$$1 \leqslant 3/4 \cdot F_r^2 \cdot \frac{\rho_g}{\rho_k - \rho_g} \leqslant 20$$

bzw.

$$1 \leqslant A_r \leqslant 100$$

wobei

$$A_r = \frac{d_k^3 \cdot g \, (\rho_k - \rho_g)}{\rho_g \cdot \nu^2}$$

und

$$F_r^2 = \frac{u^2}{g \cdot d_k}$$

sind.

Hierbei bedeuten :

u die relative Gasgeschwindigkeit in m/sec
Ar die Archimedeszahl
$F_r$ die Froude-Zahl
$\rho_g$ die Dichte des Gases in kg/m
$\rho_k$ die Dichte des Feststoffteilchens in kg/m³
$d_k$ den Durchmesser des kugelförmigen Teilchens in m
$\nu$ die kinematische Zähigkeit in m²/sec
g die Gravitationskonstante in m/sec².

Hinsichtlich Durchsatzleistung von Abgas und Grad der Schadstoffentfernung infolge guter Feststoff/Gas-Vermischung ist es zweckmäßig, daß man die Gasgeschwindigkeit im Wirbelschichtreaktor auf 1 bis 10 m/sec (angegeben als Leerrohrgeschwindigkeit) einstellt.

Die im Wirbelschichtreaktor einzustellende mittlere Suspensionsdichte kann in weiten Grenzen, z. B. im Bereich von 0,1 bis 100 kg/m³, variieren. Besonders vorteilhaft ist es jedoch, Suspensionsdichten im unteren Bereich zu wählen, da dann der Druckverlust beim Durchgang des Abgases durch das Wirbelbett besonders niedrig ist. Unter diesem Gesichtspunkt ist eine mittlere Suspensionsdichte von 0,2 bis 2 kg/m³ besonders vorteilhaft.

3

Um insbesondere eine möglichst optimale Feststoff/Gas-Vermischung zu erzielen, ist es weiterhin zweckmäßig, die Menge des stündlich umlaufenden Feststoffes auf das 20- bis 150-fache der im Schacht des Wirbelschichtreaktors befindlichen Feststoffmenge einzustellen.

Die zirkulierende Wirbelschicht kann unter Verwendung eines Wirbelschichtreaktors, eines Zyklonabscheiders und einer in den unteren Bereich des Wirbelschichtreaktors mündenden Rückführleitung gebildet werden. Durch den Zyklonabscheider wird dann die Hauptmenge des Feststoffes abgetrennt. Für die Entfernung der Feinanteile wird der den Zyklonabscheider verlassende Gasstrom einer Feinreinigung, z. B. mittels eines Elektrofilters, unterworfen.

Anstelle der Verwendung eines Zyklonabscheiders mit nachgeschaltetem Elektrofilter kann die Abscheidung des mit den Gasen aus dem Wirbelschichtreaktor ausgetragenen Sorptionsmittels in einem unmittelbar nachgeschalteten Elektrofilter vorgenommen werden. Hierdurch wird der Druckverlust des Gases beim Durchgang durch Wirbelschichtreaktor und Abscheider zusätzlich verringert.

Die weiterhin vorteilhafte Verwendung eines mehrfeldrigen Elektrofilters gibt zudem die Möglichkeit, die mit den Gasen ausgetragenen Feststoffe nach Korngröße und Zusammensetzung fraktioniert abzuscheiden und mindestens die im gasseitig vorderen Feld erhaltene gröbere Feststofffraktion in die Wirbelschicht zurückzuführen. Der im gasseitig hinteren Feld erhaltene Feststoff kann der oxidierenden Behandlung zugeführt werden.

Der der Abgasreinigung dienende Wirbelschichtreaktor kann von rechteckigem, quadratischem oder kreisförmigem Querschnitt sein. Als Gasverteiler kann ein Düsenrost vorgesehen werden. Insbesondere bei großen Reaktorquerschnitten und hohen Gasdurchsätzen ist es jedoch vorteilhaft, den unteren Bereich des Wirbelschichtreaktors konisch auszubilden und das Abgas durch eine venturiähnliche Düse einzutragen. Die letztgenannte Ausbildung ist wegen des besonders niedrigen Druckverlustes und der Unanfälligkeit gegenüber Verschmutzung und Verschleiß von Vorteil.

Der Eintrag des Sorptionsmittels, das üblicherweise eine Körnung von $dp_{50}$ bis $300\mu m$ aufweisen kann, in den Wirbelschichtreaktor kann auf jede übliche Weise, z. B. durch pneumatische Rinnen, erfolgen. Das Sorptionsmittel kann auch in Form einer wäßrigen Suspension zugeführt werden. Als Eintragsorgane sind dabei am zweckmäßigsten Lanzen vorzusehen. Infolge der bei zirkulierenden Wirbelschichten gegebenen guten Quervermischung reicht eine vergleichsweise geringe Zahl von Eintragsorganen.

Die Trockenreinigung kann bei weitgehend beliebigen Drücken, z. B. bis etwa 25 bar, vorgenommen werden. Ein Überdruck wird insbesondere dann vorzusehen sein, wenn das Abgas bereits unter Überdruck anfällt, beispielsweise weil der das Abgas liefernde Prozeß bereits unter Überdruck betrieben worden ist. Im allgemeinen wird man jedoch die Abgasreinigung bei einem Druck um ca. 1 bar vornehmen.

Aus der zirkulierenden Wirbelschicht wird — zweckmäßigerweise kontinuierlich — ein Teilstrom beladenen Sorptionsmittels abgezogen und einer oxidierenden Behandlung bei 600 bis 1200 °C unterworfen. Hierbei wird im Teilstrom enthaltenes Kalziumsulfit in Kalziumsulfat überführt. Die oxidierende Behandlung kann in jedem beliebigen Aggregat, das auch zur Durchführung von Verbrennungsprozessen geeignet ist, vorgenommen werden. Die oxidierende Behandlung kann in einer klassischen Wirbelschicht oder aber besonders zweckmäßig in einer zirkulierenden Wirbelschicht vorgenommen werden. Bei der oxidierenden Behandlung erfolgt neben der vorgenannten Kalziumsulfat-Bildung eine praktisch vollständige Nachverbrennung von mit den Abgasen in die Stufe Schadstoffsorption eingetragenen Kohlenstoff- bzw. unausgebrannter Aschepartikeln.

Um sicherzustellen, daß bei der oxidierenden Nachbehandlung bzw. der Nachverbrennung evtl. in einer Nebenreaktion gebildetes oder aber frischzugeführtes Kalziumkarbonat in das hinsichtlich Schadstoffentfernung aktivere Kalziumoxid überführt wird, sieht eine vorteilhafte Ausgestaltung der Erfindung vor, die oxidierende Behandlung bei einer Temperatur im Bereich von 800 bis 1000 °C vorzunehmen. Ein in dieser Behandlungsstufe gegebenenfalls auftretender Wärmeüberschuß kann über Kühlflächen unter z. B. Dampferzeugung abgeführt werden. Die Kühlflächen können im Aggregat der oxidierenden Behandlung selbst oder aber in einem separaten Aggregat außerhalb über das das behandelte bzw. zu behandelte Sorptionsmittel fließt, untergebracht sein. Zur oxidierenden Behandlung können vorteilhaft die in den DE-OSs/25 39 546 bzw. 26 24 302 beschriebenen Verfahren eingesetzt werden.

Das die Stufe der oxidierenden Behandlung verlassende Sorptionsmittel wird anschließend gekühlt. Der überwiegende Teil wird in die zirkulierende Wirbelschicht der Sorptionsstufe zurückgeführt, ein Teil ausgeschleust. Die Größe der Teilströme hängt von der Schadstoffbeladung des zu reinigenden Abgases, aber auch vom Grad der Schadstoffentfernung und damit dem gebildeten Kalziumsulfat ab.

Die vorgenannte Kühlung des oxidierend behandelten Sorptionsmittels kann in beliebigen herkömmlichen Vorrichtungen erfolgen. Besonders geeignet sind Wirbelschichtkühler. Die Schlußphase der Kühlung geschieht gemäß einer weiteren bevorzugten Ausgestaltung der Erfindung durch direktes Eindüsen von Wasser, wodurch hochreaktives Kalziumhydroxid gebildet wird. Die Wasserdosierung sollte dermaßen bemessen werdenm, daß sich im Wirbelschichtreaktor der zirkulierenden Wirbelschicht ein Wasserdampfgehalt von bis 30 Vol-% einstellt.

Damit die fühlbare Wärme der die Stufe der oxidierenden Behandlung verlassenden Abgase sinnvoll genutzt wird, sieht eine vorteilhafte Ausführungsform der Erfindung vor, das der oxidierenden Behandlung zu unterwerfende Sorptionsmittel hiermit vorzuwärmen. Die Vorwärmung geschieht am zweckmäßigsten in einer ein- oder zweistufigen Schwebeaustauschervorrichtung.

Die Vorwärmung, die gleichzeitig mit einer Oxidation des Kalziumsulfits zu -sulfat verbunden ist, läßt sich dabei derart ausführen, daß vor dem Eintrag des vorgewärmten Gutes in den eigentlichen Oxidationsreaktor ein Teilstrom überwiegend aus Kalziumsulfat bestehenden Gutes ausgeschleust wird. In diesem Fall erfolgt die Zugabe des frischen Sorptionsmittels direkt in den eigentlichen Oxidationsreaktor, der infolge der vorherigen Ausschleusung des kalziumsulfatreichen Gutes hinsichtlich der Feststoffaufgabe entlastet ist.

Eine Entlastung des Oxidationsreaktors läßt sich auch erzielem, wenn das frische Sorptionsmittel der Vorwärmung und das beladene Sorptionsmittel aus der Sorptionsstufe direkt dem Oxidationsreaktor zugeführt wird.

In Verbindung mit der Vorwärmung ist die Möglichkeit gegeben, die der oxidierenden Behandlung zu unterwerfenden Sorptionsmittel von Schwermetallen und Halogenid, insbesondere Chlorid, zu befreien. Hierzu wird in einer weiteren vorteilhaften Ausgestaltung der Erfindung der — in Richtung des Gasflusses gesehen — aus dem letzten Schwebeaustauscher der Stufe der oxidierenden Behandlung austretenden Gasstrom mit Wasser bzw. Kalkmilch versetzt. Die genannten Verunreinigungen können dann in einem nachgeschalteten Zyklon abgeschieden werden.

Falls Halogenide und Schwermetallverbindungen im Abgas vorhanden sind, besteht auch die Möglichkeit, beide getrennt abzuscheiden, indem zunächst durch Behandlung mit Kalkmilch die Halogenide und anschließend bei tieferen Temperaturen durch Behandlung mit Wasser die Schwermetalle entfernt werden.

Wenn als Ergebnis der oxidierenden Behandlung ein ausgeschleustes Produkt angestrebt ist, dessen Kalziumsulfat-Anteil etwa mit Naturgips vergleichbar ist, ist es vorteilhaft, die zu reinigenden Abgase vor Einleitung in die zirkulierenden Wirbelschicht der Sorptionsstufe von Flugstaub, d. h. insbesondere Asche, zu befreien. Dies geschieht in einfachster Weise unter Verwendung eines Elektrofilters.

Eine weitere Anreicherung an Kalziumsulfat läßt sich erzielen, wenn entsprechend einer bevorzugten Ausgestaltung der Erfindung das Produkt der oxidierenden Behandlung, z. B. durch Windsichtung, klassiert wird. Der am Kalziumsulfat ärmere Anteil kann dann zur weiteren Beladung in die Stufe der Sorption/oxidierenden Behandlung zurückgeführt werden.

Eine weitere Einflußnahme auf den Kalziumsulfat-Anteil des aus dem Verfahren ausgeschleusten Sorptionsmittels ist dadurch möglich, daß man gemäß einer weiteren Ausbildung der Erfindung vorrangig den feinkörnigen Anteil des Sorptionsmittels in die Stufe der oxidierenden Behandlung einträgt. Der feinkörnige Anteil weist nämlich den höheren Gehalt an Kalzium/Schwefel-Verbindungen auf. Der feinkörnige Anteil läßt sich in einfachster Weise durch eine klassierende Abscheidung des mit den Abgasen aus dem Wirbelschichtreaktor ausgetragenen Sorptionsmittels, z. B. durch Verwendung eines Abscheidezyklons zusammen mit einem ggf. mehrfeldrigen Elektrofilter gewinnen. Durch den Eintrag nur des feinkörnigen Anteils wird zudem die über die Stufe der oxidierenden Weiterbehandlung insgesamt geführte Sorptionsmittelmenge niedrig gehalten.

Das erfindungsgemäße Verfahren ist universell anwendbar und insbesondere für die Reinigung von Rauchgasen aus Kraftwerks- oder Müllverbrennungsanlagen geeignet. Es können auch Abgase von anderen industriellen Prozessen gereinigt werden, sofern sie im wesentlichen Schwefeloxide als Schadstoffe enthalten. Neben der Entfernung von Schwefelverbindungen können auch $NO_X$ und Chlorwasserstoff, Fluorwasserstoff bzw. Verbindungen hiervon bzw. Schwermetalle abgetrennt werden. Die Vorteile des erfindungsgemäßen Verfahrens sind, daß es ohne oder mit nur unbedeutenden Veränderungen hinter bestehende Anlagen geschaltet werden kann, daß der Gasreinigung folgende Gasbehandlungen entfallen können und daß — auf die Einheit der Fläche des Wirbelschichtreaktors bezogen — sehr hohe Abgasdurchsätze möglich sind. Infolge der hohen in der zirkulierenden Wirbelschicht umlaufenden Sorptionsmittelmenge, die eine beträchtliche Pufferwirkung ausübt, ist das Verfahren geeignet, selbst bei starken Schwankungen im Schadstoffgehalt der Abgase, ohne großen regeltechnischen Aufwand eine sichere Gasreinigung herbeizuführen.

Das eingesetzte Sorptionsmittel wird letztlich nachstöchiometrisch beladen, da das unreagierte oder durch Kohlendioxid-Bindung in der Sorptionsstufe gebildete Kalziumkarbonat in der nachfolgenden oxidierenden Behandlung in Kalziumoxid und Kohlendioxid gespalten wird und nach Rückführung und gegebenenfalls Hydratation durch Wassereindüsung wieder als Sorptionsmittel zur Verfügung steht. Unverbrannte Kohlenstoffanteile in den Flugstäuben können in der Stufe der oxidierenden Behandlung weitgehend umgesetzt werden, so daß sich nicht nur die unerwünschten Rest-C-Gehalte der Endprodukte weit unter 1 % senken, sondern auch — insbesondere bei Feuerungen mit geringem Ausbrand — die Energieausbeuten verbessern lassen. Schon bei teilweisem Wärmeaustausch zwischen den heißen Feststoff- und Gasströmen, die die oxidierende Behandlung verlassen, und den eintretenden kalten Materialströmen kann so eine ausgeglichene Wärmebilanz erzielt werden. Bei weitgehender Wärmerückgewinnung kann Energie in Form von z. B. Dampf zu anderweitiger Nutzung abgegeben werden.

In der Verfahrensvariante mit Flugstaubabscheidung vor Eintritt der Abgase in die Sorptionsstufe entsteht in der Stufe der oxidierenden Behandlung ein Produkt, das einen sehr hohen, mit Naturgips vergleichbaren Kalziumsuliatanteil von über 95 % besitzt. Es kann demzufolge als Ersatz für Gipsanhydrid vielfältig Verwendung finden, so z. B. im Bergbau, in der Zement- und Gipsindustrie, als Erstarrungsregler, Filterhilfsmittel oder Füllstoff. Bei ausreichendem Wärmeaustausch bleibt auch bei dieser Variante selbst bei Verwendung von Kalziumkarbonat als Sorptionsmittel die Wärmebilanz in der Stufe der oxidierenden Behandlung positiv. Nötigenfalls kann ein Stützbrenner, der zur anfänglichen Aufheizung dient, während des Betriebes mitlaufen gelassen werden.

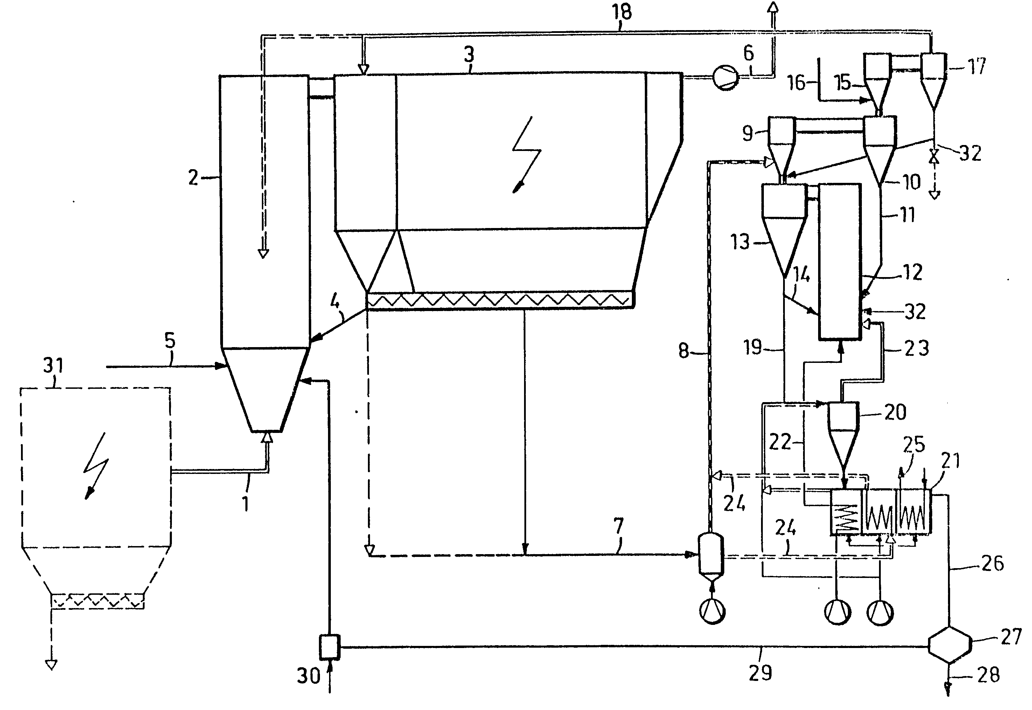

Die Erfindung wird anhand der Figur und des Ausführungsbeispiels beispielsweise und näher erläutert.

Die Figur ist eine schematische Darstellung des erfindungsgemäßen Verfahrens.

Die beispielsweise in einer Feuerungsanlage anfallenden Rauchgase werden über Leitung 1 einer aus Wirbelschichtreaktor 2, Abscheider 3 (in der vorliegenden Ausführungsform als Elektrofilter) und Rückführleitung 4 gebildeten zirkulierenden Wirbelschicht zugeführt. Der Bereich des Gaseintritts in Wirbelschichtreaktor 2 ist venturi-ähnlich ausgebildet. Die Zufuhr von Sorptionsmittel erfolgt über Lanze 5. Das im Elektrofilter von Staub befreite Rauchgas wird über Leitung 6 zum Kamin oder zum Kühlturm (nicht dargestellt) geführt.

Aus dem Zirkulationssystems 2, 3 und 4 wird ein Teilstrom beladenen Sorptionsmittels über Leitung 7 abgezogen und über eine pneumatische Förderstrecke 8 dem Schwebeaustauscher 9 der Stufe der oxidierenden Behandlung zugeführt. Das Sorptionsmittel wird im Zyklonabscheider 10 vom Gas getrennt und zur oxidierenden Behandlung über Fallrohr 11 einer weiteren, aus Wirbelschichtreaktor 12, Zyklonabscheider 13 und Rückführleitung 14 gebildeten zirkulierenden Wirbelschicht zugeführt. Hier erfolgt die Oxidation der Kalzium/Schwefel-Verbindung zu Kalziumsulfat und die Verbrennung evt. mit eingetragener Kohlenstoffpartikel.

Die Abgase der oxidierenden Behandlung werden nach Durchgang durch den Schwebeaustauscher 9 und den Zyklonabscheider 10 in einem weiteren Schwebeaustauscher 15 zur Abtrennung von Halogeniden bzw. Schwermetallverbindungen mit über Leitung 16 zugeführter Kalkmilch bzw. zugeführtem Wasser versetzt, im Abscheidezyklon 17 von weiteren Feststoffen befreit und über Leitung 18 in die Sorptionsstufe zur Entfernung von Staub, der aus der oxidierenden Behandlung stammt, zugeführt. Aus dem Abscheidezyklon werden die Halogenide bzw. Schwermetallverbindungen in dem Maße, in dem sie mit den zu reinigenden Abgasen zugeführt werden, über Leitung 32 abgetrennt.

Aus der Stufe der oxidierenden Behandlung wird regeneriertes Sorptionsmittel über Leitung 19 abgezogen und über einen Zyklonabscheider 20 in einen dreistufigen Wirbelschichtkühler 21 eingetragen. Hier wird das Sorptionsmittel unter indirekter Aufheizung von Luft, die dem Wirbelschichtreaktor 12 über Leitung 22 als Fluidisierungsgas zugeführt wird, und unter direkter Aufheizung von Luft, die nach Entstaubung im Zyklonabscheider 20 als Sekundärluft (Leitung 23) Verwendung findet, gekühlt. Eine zusätzliche Kühlung kann unter Aufheizung von Sorptionsmittel, das durch die Leitung 24 geleitet und dann der oxidierenden Behandlung zugeführt wird, erfolgen. In der dritten Stufe erfolgt noch eine Kühlung durch in die Kühlkammer eingehängte, mit Wasser betriebene Kühlflächen 25.

Gekühltes, regeneriertes Sorptionsmittel wird dann über Leitung 26 abgezogen und z. B. in einem Windsichter 27 klassiert. Ein Teil wird als « Produktion » über Leitung 28 ausgeschleust, der überwiegende Teil über Leitung 29 in die Stufe der Sorption zurückgeführt. Zuvor erfolgt bei 30 eine Eindüsung von Wasser.

In der Ausgestaltung der Erfindung mit Entstaubung des Abgases vor dessen Eintrag in die Sorptionsstufe befindet sich vor Leitung 1 der gestrichelt angedeutete Elektrofilter 31.

Die Zugabe von Sorptionsmittel kann anstelle über Leitung 5 auch ganz oder teilweise über Leitung 32 erfolgen.

## Beispiel 1

Zu reinigen war ein Rauchgas einer Steinkohlefeuerung von 140 °C, das in einer Menge von 400.000 m³/h (im Normzustand) anfiel. Das Rauchgas enthielt (bezogen auf den Normzustand)

| 2000 mg/m³ | SO$_2$ und |
|---|---|
| 6000 mg/m³ | Asche (mit 5 Gew.-% C). |

Der zum Einsatz kommende Wirbelschichtreaktor 2 für die Sorption hatte im zylindrischen Bereich einen Durchmesser von 5,6 m und eine Höhe von 15 m.

Das Rauchgas, das zuvor im Elektrofilter 31 von Staub im wesentlichen befreit worden war, wurde über die Leitung 1 dem Wirbelschichtreaktor 2 zugeführt. Über Leitung 5 wurden Quarzsand mit einer mittleren Teilchengröße von 200 μm in einer Menge von 1 kg/h und Kalziumhydroxid mit einer mittleren Teilchengröße von 5 μm in einer Menge von 950 kg/h zudosiert.

Die Gasgeschwindigkeit im Wirbelschichtreaktor 2 betrug 6 m/sec (angegeben als Leerrohrgeschwindigkeit), die mittlere Suspensionsdichte ca. 0,4 kg/m³, die Mischtemperatur von Rauchgas und in der zirkulierenden Wirbelschicht befindlichem Feststoff 80 °C.

Die am Kopf des Wirbelschichtreaktor 2 austretende Feststoff/Gas-Suspension, die eine Suspensionsdichte von 400 g/m³ (im Normzustand) besaß, gelangte dann in das zweifeldrige Elektrofilter 3. Im Staubbunker fielen stündlich 159 t Feststoff, der zum überwiegenden Teil über Leitung 4 in den unteren

Bereich des Wirbelschichtreaktors 2 zurückgeführt wurde, an. Über Leitung 7 erfolgte der Austrag von stündlich insgesamt 7 t Feststoff. Dieser bestand im wesentlichen aus einem Gemisch von Kalziumsulfit, Kalziumsulfat, Kalziumkarbonat sowie unumgesetztem Kalziumhydroxid.

Das über Leitung 6 abgeführte Abgas enthielt — auf den Normzustand bezogen —

| | |
|---|---|
| 200 mg/m³ | $SO_2$ und |
| 25 mg/m³ | Staub. |

Das heißt, bei einem auf dem $SO_2$-Gehalt im Rauchgas bezogenem stöchiometrischem Angebot von Kalziumhydroxid (bezogen auf Schwefeloxid) von 1,02 : 1 war der Grad der Schwefeldioxid-Entfernung 90 %.

Die über Leitung 7 aus dem Sorptionssystem ausgetragenen Feststoffe wurden nach Vorwärmung im Schwebeaustauscher 9 mit den 850 °C heißen Abgasen des Wirbelschichtreaktors 12 in den Wirbelschichtreaktor 12, dessen Durchmesser 0,6 m betrug, eingetragen. Über Leitung 22 wurden 700 m³/h im Wirbelschichtkühler 21 indirekt auf 530 °C vorgewärmte Luft und über Leitung 23 1300 m³/h durch direkten Wärmeaustausch im Wirbelschichtkühler 21 auf 700 °C vorgewärmte Luft eingetragen. Die Temperatur im Wirbelschichtreaktor 12 lag bei 850 °C, die Suspensionsdichte oberhalb der Sekundärluftzuführung 23 bei 40 kg/m³.

Über Leitung 19 wurden 7 t/h oxidierten Materials aus der zirkulierenden Wirbelschicht 12, 13, und 14 abgezogen, im Wirbelschichtkühler 21 auf 100 °C Endtemperatur abgekühlt und im Windsichter 27 in zwei Teilströme aufgeteilt. Die spezifisch schwere Fraktion von 1,6 t/h, die aus 95,5 % Kalziumsulfat und im übrigen überwiegend aus Kalziumoxid bestand, wurde über Leitung 28 ausgeschleust. Die spezifisch leichtere Fraktion wurden nach Eindüsung von 14,3 t/h Wasser bei 30 zur Umwandlung des enthaltenen Kalziumoxids in Kalziumhydroxid wieder in den Wirbelschichtreaktor 2 zurückgeführt. Unter den genannten Wärmeaustauschbedingungen konnte in der Gesamtwärmebilanz ein Überschuß von 0,4 MW, der über die Kühlfläche 25 abgeführt wurde, erzielt werden.

## Beispiel 2

Beispiel 1 wurde dahingehend geändert, daß über Leitung 5 anstelle des Kalziumhydroxids 1,28 t/h Kalziumkarbonat zugegeben wurde. Die in die Stufe der oxidierenden Behandlung über Leitung 7 ausgetragene Feststoffmenge betrug dann 19,5 t/h.

Auch in diesem Falle konnte bei einem Ca/S/-Verhältnis von 1,02 : 1 eine 90 %-ige Entschwefelung erreicht werden. Über Leitung 28 wurde ein Gemisch aus 1,53 t/h Kalziumsulfat und 70 kg/h Kalziumoxid ausgeschleust. Die über Leitung 29 zurückgeführte Feststoffmenge betrug 18 t/h. Der Wassereintrag lag bei 15,0 t/h. Diese Verfahrensvariante machte die Zuführung von 0,1 MW Energie zum Ausgleich der Wärmebilanz notwendig.

## Beispiel 3

Beispiel 1 wurde dahingehend geändert, daß das Rauchgas ohne vorherige Staubentfernung aus der Feuerung in den Wirbelschichtreaktor 2 gelangte. Ferner wurde anstelle des Kalziumhydroxids 1,38 t Kalziumkarbonat über Leitung 5 aufgegeben.

Die 26 t/h Feststoff, die über Leitung 7 abgezogen wurden, enthielten überwiegend bereits ausgebrannten Flugstaub sowie außerdem unverbrannten Kohlenstoff, der mengenmäßig 5 % des direkt aus der Feuerung hinzugekommenen Staubs entsprach, und im Wirbelschichtreaktor 12 vollständig verbrannt werden konnte. Dadurch erlaubte die positive Wärmebilanz die Abführung von 1 MW in Form von Dampf. Die $SO_2$-Abscheidung betrug bei einem Ca/S-Verhältnis von 1,1 : 1 wiederum 90 %. Über Leitung 28 wurden 4 t/h eines Produkts ausgeschleust, das überwiegend aus Kalziumsulfat und Flugstaub bestand. Der Kalziumoxid-Gehalt lag bei 3,1 Gew.-%, brennbare Bestandteile waren zu weniger als 0,5 % enthalten.

## Patentansprüche

1. Verfahren zur Abtrennung von im wesentlichen aus Schwefeloxiden gebildeten Schadstoffen aus Abgasen bei Temperaturen unterhalb 150 °C mittels eines Sorptionsmittels auf Basis Kalziumkarbonat, Kalziumoxid und/oder Kalziumhydroxid, das in einer aus Wirbelschichtreaktor, Abscheider und Rückführleitung gebildeten zirkulierenden Wirbelschicht geführt wird, dadurch gekennzeichnet, daß man

1. aus der zirkulierenden Wirbelschicht einen Teilstrom beladenen Sorptionsmittels abzweigt und bei einer Temperatur von 600 bis 1200 °C einer oxidierenden Behandlung unterwirft,

2. den überwiegenden Teil des oxidierend behandelten Sorptionsmittels in die zirkulierende Wirbelschicht zurückführt und den verbleibenden, das eingesetzte Sorptionsmittel vornehmlich als Kalziumsulfat enthaltenden Teilstrom ausschleust,

7

3. dem ausgeschleusten Teilstrom entsprechend frisches Sorptionsmittel der zirkulierenden Wirbelschicht und/oder der Stufe der oxidierenden Behandlung zuführt.

2. Verfahren nach Anspruch 1, dadurch gekennzeichnet, daß man die oxidierende Behandlung in einer Wirbelschicht, vorzugsweise in einer zirkulierenden Wirbelschicht, vornimmt.

3. Verfahren nach Anspruch 1 oder 2, dadurch gekennzeichnet, daß man die oxidierende Behandlung des abgezweigten Sorptionsmittels bei einer Temperatur im Bereich von 800 bis 1000 °C vornimmt.

4. Verfahren nach Anspruch 1, 2 oder 3, dadurch gekennzeichnet, daß man vor Rückführung des oxidierend behandelten Sorptionsmittels in die zirkulierende Wirbelschicht dieses durch direktes Eindüsen von Wasser aktiviert.

5. Verfahren nach einem oder mehreren der Ansprüche 1 bis 4, dadurch gekennzeichnet, daß man das der oxidierenden Behandlung zu unterwerfende Sorptionsmittel mit den Abgasen der oxidierenden Behandlung vorwärmt.

6. Verfahren nach einem oder mehreren der Ansprüche 1 bis 5, dadurch gekennzeichnet, daß man dem aus dem letzten Schwebeaustauscher der Stufe der oxidierenden Behandlung austretenden Gasstrom zur Schwermetallabscheidung bzw. Halogenid-Bindung Wasser bzw. Kalkmilch zusetzt.

7. Verfahren nach einem oder mehreren der Ansprüche 1 bis 6, dadurch gekennzeichnet, daß man die zu reinigenden Abgase vor Einleitung in die zirkulierende Wirbelschicht, vorzugsweise mittels eines Elektrofilters, von Flugstaub befreit.

8. Verfahren nach einem oder mehreren der Ansprüche 1 bis 7, dadurch gekennzeichnet, daß man das aus der Stufe der oxidierenden Behandlung abgezogene Sorptionsmittel unter gleichzeitiger Vorwärmung der in die Stufe der oxidierenden Behandlung einzutragenden Reaktionsteilnehmer kühlt.

9. Verfahren nach einem oder mehreren der Ansprüche 1 bis 8, dadurch gekennzeichnet, daß man das aus der Stufe der oxidierenden Behandlung ausgetragene und gegekühlte Sorptionsmittel einer klassierenden Behandlung unterwirft.

10. Verfahren nach einem oder mehreren der Ansprüche 1 bis 9, dadurch gekennzeichnet, daß man vorrangig den feinkörnigen Anteil des in der Stufe der Sorption erhaltenen Sorptionsmittels in die Stufe der oxidierenden Behandlung einträgt.

## Claims

1. Process for separating off pollutants consisting substantially of sulphur oxides from exhaust gases at temperatures below 150 °C by means of a sorbent on the basis of calcium carbonate, calcium oxide and/or calcium hydroxide, which is included in a circulating fluidised bed system consisting of a fluidised bed reactor, separator and return line, characterised in that

1. a partial stream of laden sorbent is diverted from the circulating fluidised bed and is subjected to an oxidising treatment at a temperature of 600 to 1200 °C,

2. the predominant part of the sorbent which has been subjected to the oxidising treatment is returned to the circulating fluidised bed and the remaining partial stream, which contains the used sorbent largely in the form of calcium sulphate is removed,

3. depending on the partial stream which has been removed, fresh sorbent is supplied to the circulating fluidised bed and/or to the oxidising treatment stage.

2. Process according to Claim 1, characterised in that the oxidising treatment is carried out in a fluidised bed, preferably in a circulating fluidised bed.

3. Process according to Claim 1 or 2, characterised in that the oxidising treatment of the sorbent which has been diverted is carried out at a temperature in the range of 800 to 1000 °C.

4. Process according to Claim 1, 2 or 3, characterised in that before the sorbent which has been subjected to the oxidising treatment is returned to the circulating fluidised bed it is activated by the direct injection of water.

5. Process according to one or more of Claims 1 to 4, characterised in that the sorbent which is to be subjected to the oxidising treatment is pre-heated with the exhaust gases from the oxidising treatment.

6. Process according to one or more of Claims 1 to 5, characterised in that water or milk of lime is added to the gas stream which emerges from the final suspension heat exchanger of the oxidising treatment stage in order to separate off heavy metal or to combine with halides.

7. Process according to one or more of Claims 1 to 6, characterised in that the exhaust gases which are to be purified are freed of airborne dust before they are fed into the circulating fluidised bed, preferably by means of an electrostatic precipitator.

8. Process according to one or more of Claims 1 to 7, characterised in that the sorbent which is withdrawn from the oxidising treatment stage is cooled in conjunction with pre-heating of the reaction participants which are to be fed to the oxidising treatment stage.

9. Process according to one or more of Claims 1 to 8, characterised in that the sorbent which has been discharged from the oxidising treatment stage and has been cooled is subjected to a classifying treatment.

10. Process according to one or more of Claims 1 to 9, characterised in that the fine-grained fraction of the sorbent obtained in the sorption stage is fed with preference to the oxidising treatment stage.

## Revendications

1. Procédé pour séparer des substances polluantes formées essentiellement d'oxydes de soufre d'effluents gazeux à des températures inférieures à 150 °C, au moyen d'un agent adsorbant à base de carbonate de calcium, d'oxyde de calcium et/ou d'hydroxyde de calcium qui est envoyé dans un lit fluidisé circulant formé d'un réacteur à lit fluidisé, d'un séparateur et d'un conduit de recyclage, caractérisé en ce qu'il consiste

1. à dériver du lit fluidisé circulant un courant partiel d'agent d'adsorption chargé et à le soumettre à un traitement oxydant à une température de 600 à 1200 °C;

2. à retourner au lit fluidisé circulant la partie prépondérante de l'agent adsorbant ayant subi le traitement d'oxydation et à évacuer le courant partiel restant contenant l'agent adsorbant utilisé, principalement sous forme de sulfate de calcium ;

3. à envoyer au lit fluidisé circulant et/ou au stade du traitement oxydant, de l'agent adsorbant frais correspondant au courant partiel évacué.

2. Procédé suivant la revendication 1, caractérisé en ce qu'il consiste à effectuer le traitement oxydant dans un lit fluidisé de préférence dans un lit fluidisé circulant.

3. Procédé suivant la revendication 1 ou 2, caractérisé en ce qu'il consiste à effectuer le traitement oxydant de l'agent adsorbant dérivé à une température comprise 800 et 1000 °C.

4. Procédé suivant la revendication 1, 2 ou 3, caractérisé en ce qu'il consiste, avant de recycler l'agent adsorbant ayant subi un traitement oxydant au lit fluidisé circulant, à l'activer par projection directe d'eau.

5. Procédé suivant l'une ou plusieurs des revendications 1 à 4, caractérisé en ce qu'il consiste à préchauffer l'agent adsorbant à soumettre au traitement oxydant par les effluents gazeux du traitement oxydant.

6. Procédé suivant l'une ou plusieurs des revendications 1 à 5, caractérisé en ce qu'il consiste à ajouter au courant gazeux sortant du dernier échangeur à suspension du stade du traitement oxydant, de l'eau ou du lait de chaux pour séparer les métaux lourds et pour fixer les halogénures.

7. Procédé suivant l'une ou plusieurs des revendications 1 à 6, caractérisé en ce qu'il consiste à débarrasser les effluents gazeux à épurer de la cendre volante, de préférence au moyen d'un électrofiltre, avant de les envoyer dans le lit fluidisé circulant.

8. Procédé suivant l'une ou plusieurs des revendications 1 à 7, caractérisé en ce qu'il consiste à refroidir l'agent adsorbant soutiré du stade du traitement oxydant tout en préchauffant simultanément les produits participant à la réaction, et à charger au stade du traitement oxydant.

9. Procédé suivant l'une ou plusieurs des revendications 1 à 8, caractérisé en ce qu'il consiste à soumettre l'agent adsorbant déchargé du stade de traitement oxydant et refroidi à un traitement de triage.

10. Procédé suivant l'une ou plusieurs des revendications 1 à 9, caractérisé en ce qu'il consiste à charger en premier la partie à grain fin de l'agent adsorbant, obtenu au stade de l'adsorption dans le stade du traitement oxydant.